Europäisches Patentamt

European Patent Office

Office européen des brevets

(19)

(11) EP 0 788 016 A1

(12) DEMANDE DE BREVET EUROPEEN

(43) Date de publication:
06.08.1997 Bulletin 1997/32

(51) Int Cl.6: G02F 1/35, H04L 7/00

(21) Numéro de dépôt: 97400179.4

(22) Date de dépôt: 27.01.1997

(84) Etats contractants désignés:
AT BE CH DE ES FI GB IT LI NL SE

(30) Priorité: 30.01.1996 FR 9601082

(71) Demandeur: ALCATEL N.V.
2288 BH Rijswijk (NL)

(72) Inventeur: Bigo, Sébastien
91120 Palaiseau (FR)

(74) Mandataire: Smith, Bradford Lee et al
c/o Alcatel Alsthom Recherche,
Intellectual Property Department
30, avenue Kléber
75116 Paris (FR)

(54) Modulateur Kerr indépendant de la polarisation,et dispositif de récupération toute optique d'horloge comprenant un tel modulateur

(57) L'invention concerne un modulateur optique de type Kerr et dispositif de récupération toute optique d'horloge par blocage actif de modes d'un laser à fibre en boucle comprenant un tel modulateur. Le fonctionnement est indépendant de la polarisation des signaux présentés sur l'entrée signal (longueur d'onde de $\lambda_s$). La longueur d'onde du signal d'horloge fourni par le dispositif est de $\lambda_c$. Le modulateur est composé d'un nombre pair de tronçons, et dans une réalisation préférée quatre tronçons (T1,T2,T3,T4) de fibre à maintien de polarisation, de longueurs optiques équivalentes, reliés optiquement entre eux par trois épissures (E1,E2,E3) en trois endroits. Aux premier et troisième épissures, les axes neutres de propagation de la fibre à maintien de polarisation sont tournés de 90°. Selon une variante avantageuse de l'invention, à la deuxième épissure, il est inséré dans la boucle un convertisseur de modes, qui comprend un démultiplexeur et un multiplexeur optiques, ainsi que deux chemins optiques à maintien de polarisation les connectant. Le démultiplexeur divise les deux signaux optiques présents dans la boucle du laser à fibre ($\lambda_s$ et $\lambda_c$) respectivement sur lesdits deux chemins. Sur le chemin véhiculant le signal d'entrée ($\lambda_s$), il est effectué une épissure avec rotation de 90° des axes neutres de maintien de polarisation. Sur l'autre chemin, il n'y a pas de rotation des axes. Ledit multiplexeur recombine ensuite les deux signaux ($\lambda_s$ et $\lambda_c$).

Application aux télécommunications longue-distances via fibre optique.

FIG. 6

EP 0 788 016 A1

## Description

L'invention concerne le domaine de traitement de signaux optiques, qui circulent par exemple au sein d'un système de télécommunications optiques. Plus précisément, l'invention concerne un modulateur optique de type Kerr, ainsi qu'un dispositif de récupération tout optique d'horloge par blocage actif de modes d'un laser à fibre en boucle, tous deux indépendants de la polarisation. Un tel dispositif peut être utilisé pour la régénération par la modulation synchrone, ou encore pour la démodulation de signaux optiques à haut débit.

L'homme de l'art connaît de nombreuses réalisations de dispositifs de récupération toute optique d'horloge, et en particulier par blocage actif de modes d'un laser à fibre en boucle. Le blocage de modes du laser repose sur l'effet Kerr qui se produit dans la boucle de fibre optique lors de l'injection dans la boucle d'une lumière de signal d'une intensité suffisante pour provoquer l'effet Kerr. Dans ces dispositifs de l'art antérieur, le fonctionnement est indépendant de la polarisation car les dispositifs de l'art antérieur sont réalisés en utilisant une fibre optique qui n'est pas dispersive en polarisation ; les effets de la polarisation sont ainsi moyennés et s'annulent. En revanche, ces réalisations sont très sensibles à leur environnement (température, vibrations, hygrométrie, et cetera), ce qui limite leurs applications pratiques.

La récupération toute-optique d'horloge par blocage actif d'un laser à fibre en boucle est décrit par exemple dans le document D1 = demande de brevet français FR 94 15555 du 23.12.94, au nom d'Alcatel N.V., intitulé "Dispositif de régénération en ligne d'un signal transmis par solitons via la modulation synchrone des solitons à l'aide d'un miroir optique non-linéaire." Ce document D1, non encore publié à la date de la présente demande, est selon l'avis de la Demanderesse, le document le plus proche de l'art antérieur pour apprécier l'apport de la présente invention, et son contenu est expressément incorporé à la présente demande.

Le dispositif décrit dans D1 opère la régénération de solitons en ligne par la modulation synchrone de ces solitons utilisant un miroir optique non linéaire (NOLM) comme modulateur optique, ce modulateur NOLM étant commandé par un signal d'horloge récupéré du signal soliton par des moyens de récupération d'horloge qui dans une réalisation particulière sont des moyens tout-optiques, par exemple par blocage de modes d'un laser à fibre en boucle. Le laser comprend un coupleur d'entrée (C3, C7, C10) qui peut être un coupleur 50/50 ou un coupleur dissymétrique. Selon une réalisation particulière, le système de récupération d'horloge comprend en outre un ou plusieurs amplificateurs optiques ainsi qu'un filtre passe-bande de sortie. L'application visée serait, comme dans le cas de la présente invention, les télécommunications optiques sur grandes distances, et en particulier par solitons.

Ce document D1 enseigne l'utilisation d'une récupération d'horloge optique par blocage de modes d'un laser à fibre en anneau, comme D3 décrit ci-après, dans un laser à fibre qui ne présente pas de dispersion de polarisation, et donc son fonctionnement est indépendant de la polarisation du signal d'entrée.

D'autres documents sont utiles pour une meilleure compréhension de la présente invention, et seront introduits brièvement avec une appréciation de leurs apports dans ce but. Ces documents sont également expressément incorporés à la présente demande en tant que descriptions de l'art antérieur :

D2 = N. Finlayson et al., (1992) "Switch inversion and polarization sensitivity of the nonlinear-optical loop mirror (NOLM)", Optics Lett., v.17, n°2, pp. 112-114, 15 Jan. 1992. Ce document enseigne qu'un miroir non-linéaire (NOLM en anglais) peut être agencé comme un commutateur qui n'est pas ou peu sensible à la polarisation du signal lumineux à commuter dans son régime linéaire, et que la biréfringence de la boucle peut contribuer aux instabilités constatées dans des lasers en anneau à blocage de modes.

D3 = J. K. Lucek et K. Smith, (1993) "All optical signal regenerator", Opt. Lett. v.18, n°15, pp.1226-1228, 1 aug. 1993, expressément incorporé à la présente demande en tant que description de l'art antérieur.

Le système connu de D3 et montré sur la figure 1 utilise un miroir optique non linéaire (NOLM) pour moduler un signal d'horloge à une première longueur d'onde $\lambda_h = 1.56\mu m$ par le train de bits d'un signal à régénérer, ce signal étant à une deuxième longueur d'onde $\lambda_s = 1.54\mu m$. Le signal d'horloge ainsi modulé constitue alors le signal régénéré, qui a donc changé de longueur d'onde (1.56 μm en sortie au lieu de 1.54 mm du signal d'entrée).

Selon l'enseignement de ce document, le signal d'horloge est récupéré du signal introduit sur la fibre d'entrée F1 par blocage de modes d'un laser à fibre en anneau RL, pour générer un train d'impulsions d'horloge au rythme des bits du signal, avec une gigue réduite par le blocage de modes du laser. La longueur de la cavité du laser peut être ajusté à l'aide d'un dispositif de réglage mécanique du temps de trajet FS pour être un multiple entier de l'espace occupé par un bit dans l'anneau. Le dispositif FS est commandé par des moyens de commande (non-montrés) qui agissent en contre-réaction pour maintenir la longueur de l'anneau constante. Les dispositifs biréfringents de contrôle de polarisation PC sont ajustés pour minimiser les effets de la polarisation dans l'anneau qui tendent à diminuer le rendement du laser.

Le train d'impulsions d'horloge est extrait du laser en anneau par le coupleur C6, d'où il transite via un isolateur optique I et un dispositif de réglage mécanique du temps de trajet FS avant d'être introduit sur l'entrée 1 du coupleur C1 du NOLM . Le signal d'entrée à $\lambda_s = 1.54\mu m$ est introduit dans la boucle L du NOLM par la fibre d'entrée F3 via le coupleur C2. Les dispositifs biréfringents de contrôle de polarisation PC sont ajustés pour rendre le NOLM parfaitement réfléchissant d'un signal d'horloge présent sur l'entrée 1 du coupleur C1 (réfléchissant vers l'entrée 1) en l'absence d'un signal soliton d'entrée sur le coupleur C2. En revanche, quand un bit "1" du signal est introduit dans le NOLM via le coupleur C2, il effectue une commutation qui laisse passer le signal d'horloge, qui ressort sur la fibre de sortie F2 via la sortie 2 du coupleur C1, sans gigue temporelle.

Le NOLM est donc utilisé comme un commutateur commandé par les bits du signal à régénérer, qui commute le signal d'horloge "on" quand le bit du signal est "1" (le NOLM est transparent au signal d'horloge) et "off" quand le bit du signal est "0" (le NOLM est réfléchissant au signal d'horloge).

La fenêtre temporelle du bit du signal qui constitue la commande de commutation du NOLM est élargie par rapport au signal d'horloge pour assurer une insensibilité à la gigue du signal à régénérer (voir p. 1227 col. de gauche, dernier para. du D3). Ceci est accompli par l'utilisation d'un "glissement" (or "walk-off" en anglais) relatif entre le signal introduit par C2, et le signal d'horloge en direction de co-propagation (celle des aiguilles d'une montre sur la figure), du à la dispersion chromatique entre les deux longueurs d'onde utilisées.

Le système proposé par Lucek et Smith n'est pas le plus approprié pour la récupération d'horloge à partir d'un train de solitons pour plusieurs raisons, et notamment parce que les dispositifs de "contrôle de polarisation" (réf. PC sur la fig. 1 de D3) doivent être ajustés pour minimiser les effets de la polarisation dans l'anneau qui tendent à diminuer le rendement du laser, mais ce réglage est à surveiller car dépendant sur des paramètres d'environnement (température, vibrations,...).

La fiabilité d'opération d'un tel dispositif sur le terrain semblerait être loin d'être suffisant par rapport à ces problèmes.

Le document publié à la date de la présente demande considéré par la Demanderesse comme le document publié le plus proche de l'art antérieur est D4 = Smith , K. et Lucek, J.K. (1992) "All optical clock recovery using a mode locked laser, Elect. Lett. 28 (19) p. 1814, 10 Sept. 1992. Ce document décrit la récupération d'horloge tout optique à partir d'un signal soliton, par blocage de modes d'un laser en anneau de fibre optique via l'introduction dans l'anneau dudit signal soliton. Le dispositif de D4 souffre les mêmes inconvénients que le dispositif de D3, et pour les mêmes raisons.

D5 = L.E. Adams et al., (1994) "All-optical clock recovery using a mode locked figure eight laser with a semiconductor nonlinearity", Electron. Lett., v. 30, n° 20, pp. 1696-97, 29 sept. 1994. Ce document enseigne une autre réalisation d'un laser à blocage de modes pour la récupération toute-optique d'horloge.

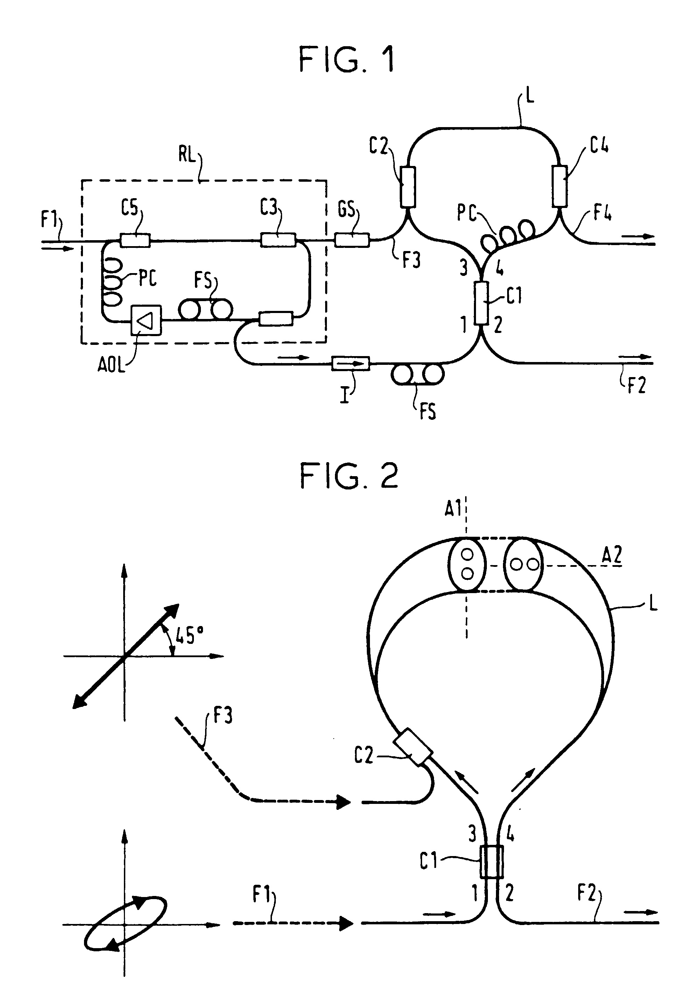

D6 = Uchiyama et al. (1995), "Polarisation independant wavelength conversion using non linear optical loop mirror", Elect. Lett. 31 (21), p.1862, 12 october 1995 décrit un système de conversion de longueur d'onde d'un signal optique de polarisation indéterminée, appliqué à l'entrée contrôle d'un NOLM tel que décrit ci-après à l'aide de la figure 2. Pour rendre la performance de ce dispositif indépendante de la polarisation du signal optique à convertir en longueur d'onde, le NOLM est réalisé en fibre à maintien de polarisation comme en D7 ci-après, et le signal d'horloge est injecté sur l'entrée du coupleur C1 avec une polarisation orientée à 45° par rapport aux axes neutres de la boucle du NOLM.

D7 = K. Uchiyama et al., (1992) "Ultrafast polarisation - independent all-optical switching using a polarisation diversity scheme in the nonlinear optical loop mirror (NOLM)", electron. lett., v.28, no.20, pp. 1864-1866, 24 sept. 1992. Ce document montre l'utilisation d'un NOLM comme un commutateur, qui est rendu insensible à la polarisation de la lumière du signal à commuter. Ceci est obtenu en utilisant une fibre à maintien de polarisation, que l'on aurait coupée et tournée à 90° au point médian de la boucle du NOLM. Le principe en est illustré en figure 2.

La boucle du NOLM est constituée par exemple d'une fibre à maintien de polarisation PANDA à deux trous. En effectuant une rotation de 90° entre l'axe A1 et l'axe A2 à mi-chemin de propagation, l'axe rapide (respectivement lent) de la partie gauche devient l'axe lent (respectivement rapide) de la partie droite de la boucle sur la figure 2. La fibre de la boucle (L) est dispersive en polarisation, c'est-à-dire que la vitesse de propagation de la lumière à l'intérieur de la fibre est différente pour une polarisation alignée avec l'axe rapide que pour une polarisation orthogonale à l'axe rapide de propagation, c'est-à-dire l'axe lent de la fibre. Il est nécessaire de s'affranchir de la dispersion en polarisation, ce que l'on réalise en utilisant deux longueurs équivalentes de fibre ayant une disposition mutuellement orthogonale des axes A1, A2 de maintien de polarisation, ce qui aura pour effet d'annuler la dispersion de polarisation sur la longueur de la boucle L.

Pour rendre le système indépendant de la polarisation du signal commuté, la polarisation du signal de contrôle qui est introduit dans la boucle L par le coupleur C2 sur la fibre d'entrée de contrôle F3 est injecté à 45° des deux axes orthogonaux A1, A2. De la même manière que précédemment, les effets de la dispersion de polarisation s'annulent.

D8= L.E. Adams et al., (1994) "All-optical clock recovery using a modelocked figure eight laser with a semiconductor nonlinearity", electron. lett., v.30, n°20, pp. 1696-97, 29 sept. 1994. Ce document enseigne une autre réalisation d'un laser à blocage de modes pour la récupération toute-optique d'horloge.

D9 = Widdowson, T. et al. (1994) : "Soliton sheparding : All optical active soliton control over global distances", Elect. Lett. 30(12) pp. 990-991. Ce document enseigne l'utilisation d'un dispositif modulateur optique de type Kerr pour une application "shepherding" pour éliminer la gigue des solitons dans des liaisons de télécommunications optiques de très longues distances. Le mot anglais "shepherding" désigne un guidage temporel des solitons pour des systèmes à très haut débit multiplexés temporellement. Le modulateur de l'invention remplacera avantageusement la fibre à décalage de dispersion de 13 km décrite par ce document.

L'invention a pour but de pallier les problèmes et les inconvénients de l'art antérieur. Il est un but de l'invention de réaliser un modulateur optique de type Kerr dont le fonctionnement est indépendant de la polarisation de la lumière signal et de la lumière de pompe injectée dans ledit modulateur. Il est un autre but de l'invention de réaliser un dispositif de récupération toute-optique d'horloge qui ne nécessite pas de réglages de polarisations, et qui ne soit pas ou peu sensible aux effets de l'environnement dans des conditions normales de fonctionnement, mais dont le fonctionnement reste indépendant de la polarisation.

A ces fins, l'invention propose un modulateur optique de type Kerr **caractérisé en ce qu'**il comprend un nombre paire (2i>2, i entier) de tronçons (T1,T2,T3,T4,...) de fibre à maintien de polarisation ayant deux axes neutres de propagation, ces tronçons étant de longueurs optiques équivalentes et reliés optiquement entre eux par 2i-1 épissures (E1,E2,E3,...) en 2i-1 endroits, lesdites axes neutres de propagation de la fibre étant tournées de 90° à toutes les épissures, de manière à compenser la dispersion de polarisation.

Selon une réalisation particulièrement avantageuse, l'invention propose un modulateur optique de type Kerr, **caractérisé en ce que** qu'il comprend un nombre pair (2i>2, i entier) de tronçons (T1,T2,T3,T4...) de fibre à maintien de polarisation ayant deux axes neutres de propagation, ces tronçons étant de longueurs optiques équivalentes et reliés optiquement entre eux par 2i-1 épissures (E1,E2,E3,...) en 2i-1 endroits, lesdits axes neutres de propagation de la fibre étant tournés de 90° à toutes les épissures, sauf celle du milieu de la boucle (la $i^{ème}$) (E1,E3), et la $i^{ème}$ épissure comprenant un convertisseur de modes, ledit convertisseur de modes comprend un démultiplexeur (C3) et un multiplexeur (C4) optiques à maintien de polarisation, ainsi qu'un premier et un deuxième chemins optiques ($F\lambda_s$, $F\lambda_c$) les connectant pour véhiculer respectivement lesdites première et deuxième longueurs d'onde ($\lambda_s$, $\lambda_c$), lesdits chemins optiques étant en fibre à maintien de polarisation, et en ce que les axes neutres dudit premier chemin ($F\lambda_s$) sont tournées de 90°, tandis que les axes neutres dudit deuxième chemin ($F\lambda_c$) ne sont pas tournées.

L'invention concerne également un dispositif de récupération toute-optique d'horloge par blocage actif de modes d'un laser à fibre en boucle, ledit laser en boucle comprenant une longueur de fibre optique (R), ladite boucle (R) ayant une entrée signal via un premier coupleur optique C10 pour l'injection d'un premier signal optique d'entrée caractérisé en partie par une première longueur d'onde ($\lambda_s$) et une sortie signal et un deuxième coupleur optique (C20) de sortie du signal d'horloge caractérisé en partie par une deuxième longueur d'onde ($\lambda_c$) ledit deuxième signal étant extrait de ladite boucle (R) via la fibre F3, **caractérisé en ce que** ladite boucle de fibre optique (R) comprend un nombre pair (2i>2, i entier) de tronçons (T1,T2,T3,T4...) de fibre à maintien de polarisation ayant deux axes neutres de propagation, ces tronçons étant de longueurs optiques équivalentes et reliés optiquement entre eux par 2i-1 épissures (E1,E2,E3,...) en 2i-1 endroits, lesditss axes neutres de propagation de la fibre étant tournés de 90° à toutes les épissures.

Selon une réalisation particulièrement avantageuse, l'invention propose un dispositif de récupération toute-optique d'horloge par blocage actif de modes d'un laser à fibre en boucle, ledit laser en boucle comprenant une longueur de fibre optique (R), ladite boucle (R) ayant une entrée signal via un premier coupleur optique C10 pour l'injection d'un premier signal optique d'entrée caractérisé en partie par une première longueur d'onde ($\lambda_s$) et une sortie signal et un deuxième coupleur optique (C20) de sortie du signal d'horloge caractérisé en partie par une deuxième longueur d'onde ($\lambda_c$) ledit deuxième signal étant extrait de ladite boucle (R) via la fibre F3, **caractérisé en ce que** ladite boucle de fibre optique (R) comprend un nombre pair (2i>2, i entier) de tronçons (T1,T2,T3,T4...) de fibre à maintien de polarisation ayant deux axes neutres de propagation, ces tronçons étant de longueurs optiques équivalentes et reliés optiquement entre eux par 2i-1 épissures (E1,E2,E3,...) en 2i-1 endroits, lesdites axes neutres de propagation de la fibre étant tournés de 90° à toutes les épissures, sauf celle du milieu de la boucle (la $i^{ème}$) (E1,E3), et la $i^{ème}$ épissure comprenant un convertisseur de modes, ledit convertisseur de modes comprend un démultiplexeur (C3) et un multiplexeur (C4) optiques à maintien de polarisation, ainsi qu'un premier et un deuxième chemins optiques ($F\lambda_s$, $F\lambda_c$) les connectant pour véhiculer respectivement lesdites première et deuxième longueurs d'onde ($\lambda_s$, $\lambda_c$), lesdits chemins optiques étant en fibre à maintien de polarisation, et en ce que les axes neutres dudit premier chemin ($F\lambda_s$) sont tournés de 90°, tandis que les axes neutres dudit deuxième chemin ($F\lambda_c$) ne sont pas tournés.

Selon une réalisation particulière, lesdits démultiplexeur et multiplexeur optiques sont des coupleurs optiques à maintien de polarisation et sélectifs en longueur d'onde (C3,C4) qui sépare, respectivement combine, lesdits premier et deuxième signaux optiques ayant lesdites première et deuxième longueurs d'onde ($\lambda_s$, $\lambda_c$).

Selon une variante, les tronçons sont au nombre de quatre, et les épissures sont au nombre de trois.

Selon une réalisation préférée, les longueurs (L1,L2,L3,L4,...) desdits 2i tronçons (T1,T2,T3,T4,...) de fibre à maintien de polarisation sont choisies de telle sorte que le déphasage non linéaire induit par le contrôle sur l'un des axes neutres et intégré sur les i premiers tronçons (la première moitié de la boucle, T1,T2), est égale au déphasage non linéaire induit par le contrôle sur l'autre axe et intégré sur les i derniers tronçons (la deuxième moitié de la boucle, T3,T4).

Le dispositif de l'invention peut être avantageusement agencé en vue des applications connues, mais dont les performances ont été jusqu'ici compromises par la sensibilité à l'environnement des dispositifs de récupération tout-optique d'horloge de l'art antérieur. Ainsi, l'invention propose également :

- Un dispositif de régénérateur de signaux optiques soliton comprenant un dispositif de récupération tout-optique d'horloge selon l'invention ;
- Un dispositif démultiplexeur optique comprenant un dispositif de récupération tout-optique d'horloge selon l'invention ;
- Un dispositif démodulateur optique comprenant un dispositif de récupération tout-optique d'horloge selon l'invention ;
- Un laser à fibre en boucle comprenant un modulateur optique selon l'invention ;
- Un système de transmission de solitons comprenant un dispositif de récupération d'horloge utilisant un laser à blocage de modes comprenant un modulateur Kerr selon l'invention.

L'invention sera mieux comprise, avec ses différentes caractéristiques et avantages, à la lumière de la description détaillée qui suit, avec ses dessins annexés, dont :

- la figure 1, déjà décrite, montre schématiquement un dispositif de régénération de solitons par commutation d'un signal d'horloge à l'aide d'un NOLM, connu de l'art antérieur par le document D3 ;
- la figure 2, déjà décrite, qui montre schématiquement un commutateur NOLM insensible à la polarisation du signal à commuter, tel que connu de l'art antérieur par le document D7 ;
- la figure 3, qui montre schématiquement un exemple d'un dispositif de récupération tout-optique d'horloge d'un signal optique selon des principes connus de blocage des modes d'un laser à fibre en anneau ;
- la figure 4, qui montre schématiquement un exemple d'une réalisation selon le document D1 d'un dispositif de modulation synchrone de solitons dans lequel le modulateur est un NOLM ;
- la figure 5, qui montre schématiquement un système de transmission de signaux solitons selon l'invention, comprenant un dispositif de régénération selon l'invention ainsi qu'une pluralité d'amplificateurs optiques de ligne et une pluralité de filtres guidants ;
- la figure 6, qui montre schématiquement un exemple d'un dispositif de récupération tout-optique d'horloge d'un signal optique selon l'invention, fonctionnant selon les principes connus de blocage des modes d'un laser à fibre en anneau et comprenant un modulateur Kerr selon l'invention ;
- la figure 7, qui montre schématiquement un exemple d'un dispositif convertisseur de modes apte à être utilisé dans la réalisation de la figure 6.

Les dessins sont donnés à titre d'exemples non limitatifs, dans le but d'illustrer les principes de l'invention. Sur toutes les figures, les mêmes repères se réfèrent aux mêmes éléments, et l'échelle n'est pas toujours respectée pour des raisons de clarté.

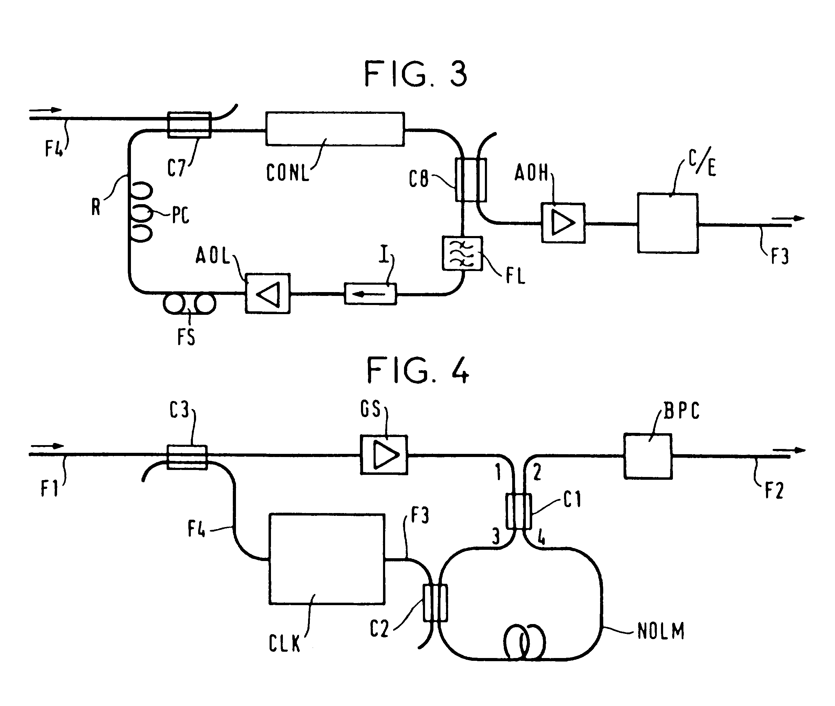

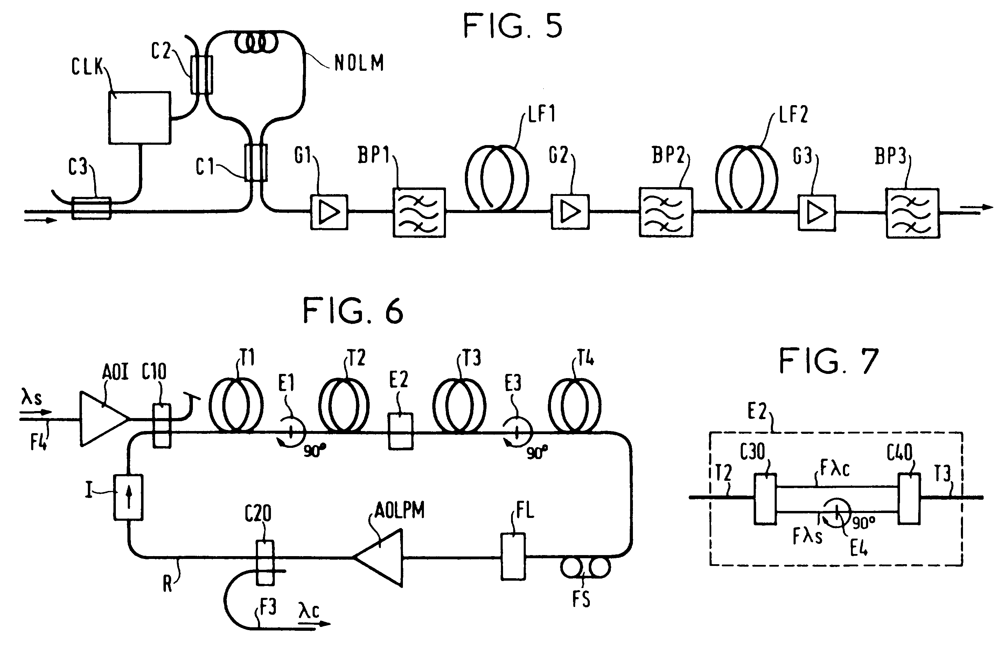

La figure 3 montre schématiquement un exemple d'un dispositif de récupération tout-optique d'horloge d'un signal optique selon des principes connus de blocage des modes d'un laser à fibre en anneau. La structure globale du dispositif de la figure 3 est classique. Le signal optique de type soliton, prélevé par le coupleur de prélèvement C3 de la figure 5, se propage sur la fibre optique F4 jusqu'à une boucle de fibre R à laquelle il est couplé via le coupleur C7. La boucle de fibre R et les différent composants optiques qui s'y trouvent forment un laser en anneau, tel que déjà décrit en référence à la figure 1 (repère RL) ou tel que décrit dans le document D8 de L. E. Adams et al. Le laser en anneau comprend des moyens d'amplification optique AOL, un isolateur optique I pour un fonctionnement unidirectionnel, des moyens de filtrage optique FL centrés sur la longueur d'onde de la lumière laser, et des moyens de couplage optique non linéaire CONL permettant d'obtenir des non linéarités d'amplitude et/ou de phase en fonction de l'amplitude du champ électrique de la lumière circulant dans la fibre R. Ces moyens non linéaires CONL peuvent être par exemple un modulateur optique Kerr selon l'invention décrite dans la présente demande.

Le laser en anneau peut fonctionner en continu (CW) en l'absence d'un signal soliton injecté via le coupleur C7. En revanche, dès qu'un train de bits est introduit via le coupleur C7, celui-ci provoque le blocage de modes du laser en anneau au rythme des bits du signal, pourvu que la longueur de la cavité du laser soit un multiple entier de l'espace occupé par un bit. Cette longueur peut être ajustée à l'aide d'un dispositif de réglage mécanique du temps de trajet FS pour être un multiple entier de l'espace occupé par un bit dans l'anneau. Le dispositif FS est commandé par des moyens de commande (non-montrés) qui agissent en contre-réaction pour maintenir la longueur de l'anneau constante.

Ces impulsions peuvent être ensuite prélevées via le coupleur optique C8 pour donner un signal d'horloge sensiblement sans gigue temporelle. Pour rendre ce signal aisément exploitable en vue de la modulation synchrone, la figure 7 montre un deuxième amplificateur optique AOH et des moyens de compression et/ou d'expansion, pour donner la forme voulue aux impulsions issues du laser en anneau (amplitude, durée, forme temporelle de montée et descente,...). En effet, les impulsions brutes sont relativement étroites, et il peut être souhaitable de les élargir avant de les utiliser. Ainsi, les impulsions d'horloge fournies sur la fibre optique F3 seront optimisées pour l'utilisation voulue.

La figure 4 montre schématiquement un exemple d'une réalisation selon le document D1 d'un dispositif de modulation synchrone de solitons dans lequel le modulateur est un NOLM. Dans le dispositif montré sur la figure 4, le signal optique de type soliton à régénérer arrive par la fibre optique d'entrée F1, où un coupleur optique C3 prélève une partie du signal pour en extraire un signal d'horloge par les moyens de récupération d'horloge CLK. Ensuite, ces moyens CLK appliquent ledit signal optique d'horloge sur l'entrée de contrôle du NOLM via le coupleur C2. Le signal soliton sera toujours à la même longueur d'onde $\lambda_s$. La longueur d'onde $\lambda_h$ du signal d'horloge sera de préférence légèrement différente de celle du signal soliton $\lambda_s$, pour permettre le filtrage bloquant de l'horloge en sortie du dispositif par un filtre passe-bande BPC dont la bande passante est centrée sur la longueur d'onde $\lambda_s$ du soliton.

En aval du coupleur de prélèvement C3, le signal soliton continue à se propager sur la fibre optique d'entrée F1 jusqu'à la porte d'entrée 1 du coupleur C1 du NOLM. Selon une variante, un amplificateur optique GS peut être placé en amont du miroir NOLM pour compenser les pertes en ligne subies par le soliton depuis la dernière fois qu'il a été amplifié ou régénéré.

Le fonctionnement du NOLM est similaire à ce qui a été décrit ci-dessus en référence à la figure 1. Les solitons arrivant à la porte 1 du coupleur C1 du NOLM sont ainsi modulés par le signal d'horloge appliqué à l'entrée de contrôle F3 via le coupleur de contrôle C2. Les temps de trajet de l'horloge et des solitons selon leurs trajets respectifs doivent être ajustés comme dans le dispositif de la figure 1, pour permettre la synchronisation de ces signaux quand ils circulent dans le NOLM.

Le signal soliton est ainsi modulé par l'enveloppe du signal d'horloge, ce qui permet de procurer une modulation d'amplitude des solitons. En effet, la modulation d'amplitude est jugée suffisante pour diminuer, voire éliminer la gigue Gordon-Haus à la sortie du dispositif de régénération.

La figure 5 montre schématiquement un système de transmission de signaux solitons selon l'invention, comprenant un dispositif de récupération d'horloge selon l'invention ainsi qu'une pluralité d'amplificateurs optiques de ligne et une pluralité de filtres guidants. Les filtres guidants compriment la largeur spectrale des solitons, mais enlèvent de l'énergie des solitons en se faisant. C'est pourquoi le gain des amplificateurs en ligne doit être supérieur aux pertes de ligne subies par les solitons sur les fibres optiques (LF1, LF2, ...) entre les amplificateurs (G1, G2, G3, ...). En réduisant la largeur spectrale des solitons, la gigue temporelle est aussi réduite par les filtres guidants, tel qu'expliqué dans le document D10 = L.F. Mollenauer et al., (1992) "The sliding-frequency guiding filter: an improved form of soliton jitter control", Optics Letters v.17, n°22, pp. 1575-1577, 15 nov. 1992.

Il est un but de l'invention de pallier les inconvénients de l'art antérieur et notamment de permettre au modulateur optique, et donc les dispositifs comprenant un tel modulateur, dont le laser à fibre en boucle à blocage de modes, et le dispositif de récupération toute-optique d'horloge par blocage de modes d'un tel laser, d'être insensible aux vibrations et aux variations de température environnante.

Le fonctionnement du dispositif de l'invention, dont un exemple est montré schématiquement sur la figure 6, est similaire à celui des NOLM décrits ci-dessus à l'aide de la figure 2. Tout comme le NOLM de la figure 2, le laser de l'invention est réalisé à partir d'une pluralité de tronçons de fibre à maintien de polarisation. Selon l'invention, le nombre de tronçons est un nombre pair 2i, avec i entier et supérieur à 1. Conformément à la figure 6, il faut un minimum de quatre tronçons (T1,T2,T3,T4) de longueurs optiques équivalentes (respectivement (L1,L2,L3,L4). Ces quatre tronçons (T1,T2,T3,T4) sont reliés optiquement entre premier et troisième épissures (E1,E3), les axes neutres de propagation de la fibre à maintien de polarisation sont tournés de 90°, comme expliqué ci-dessus avec référence à l'unique épissure de la figure 2.

Selon une variante préférée de l'invention, à la deuxième épissure E2 entre les tronçons T2 et T3, il est inséré dans la boucle L un convertisseur de modes tel que montré sur la figure 7, qui comprend un démultiplexeur C30 et un multiplexeur C40 optiques, ainsi que deux chemins optiques (F$\lambda_s$ et F$\lambda_c$) à maintien de polarisation les connectant. Le démultiplexeur C30 divise les deux signaux optiques présentés sur son entrée ($\lambda_s,\lambda_c$) respectivement sur lesdits deux chemins (F$\lambda_s$, F$\lambda_c$). Sur le chemin (F$\lambda_c$) véhiculant le signal d'entrée ($\lambda_s$), il est effectué une épissure E4 avec rotation de 90° des axes neutres de propagation de la fibre à maintien de polarisation. Sur l'autre chemin (F$\lambda_c$), il n'y a pas de rotation des axes. Ledit multiplexeur C40 recombine ensuite les deux signaux ($\lambda_s$ et $\lambda_c$).

De tels dispositifs démultiplexeur (C3) et multiplexeur (C4) peuvent être réalisés par exemple avec trois fibres à maintien de polarisation, avec un filtre dichroïque et un coupleur optique à maintien de polarisation. Un tel dispositif est disponible commercialement auprès de la société canadienne JDS FITEL Inc., Nepean, Ontario sous le numéro de catalogue WD1555-ALL5JM1, par exemple. Il est également possible que, dans un avenir proche, un tel composant puisse être réalisé en technologie d'optique intégré.

On n'a point besoin de s'arranger pour injecter le signal optique d'entrée ($\lambda_s$) dans le laser via le coupleur C10 avec son axe de polarisation orienté à une direction quelconque par rapport aux axes A1, A2 de maintien dans la fibre de boucle R. Le fonctionnement du dispositif est ainsi insensible à la polarisation des deux signaux ($\lambda_s$ et $\lambda_c$), sans réglage aucun, ce qui constitue un avantage majeur par rapport aux réalisations de l'art antérieur décrites dans les documents D1, D2, et D3.

Par rapport au dispositif du document D4, la réalisation est considérablement simplifiée, car les polarisations des deux signaux optiques ($\lambda_s$, $\lambda_c$) ne sont pas critiques comme elle le sont dans D4. De plus, le convertisseur de modes de l'invention est relativement insensible à la température environnante.e Le dispositif de D4 requiert une régulation de température pour fonctionner correctement. D'autre part, le laser de D4 ne compense pas la dispersion de la polarisation des signaux se propageant sur la boucle R.

Ainsi, le dispositif de l'invention pourra fonctionner correctement et de manière reproductible, insensible aux variations de l'environnement telles celles de température, des accélérations, de vibrations, et cetera. Et bien sur, le dispositif fonctionne avec des signaux ($\lambda_s$, $\lambda_c$) de polarisations arbitraires, inconnues, et éventuellement ne pouvant être maîtrisées. D'autre part, la compensation de la dispersion de polarisation est effectuée automatiquement et sans réglages.

Pour décrire plus précisément un mode de réalisation préférée de l'invention, il convient de décrire ce qui veut dire, dans le présent contexte, des longueurs optiques équivalentes des tronçons (T1,T2,T3,T4). Pour cela, il faut tenir compte des pertes optiques subies par les signaux optiques se propageant dans les tronçons de la boucle R et à travers les épissures les reliant, car la dispersion de polarisation dépend de l'égalité des déphasages non linéaires (effet Kerr) avant et après le convertisseur de modes, et donc de l'amplitude des signaux.

Pour donner un exemple du calcul des longueurs de tronçons, on fera quelques hypothèses pour simplifier l'exposé. On choisit le nombre pair de tronçons 2i = 4. Au sein de chaque paire de tronçons, les longueurs seront choisies identiques (L1=L2, L3=L4) pour compenser la dispersion de polarisation au sein de chaque paire. Tel que montré sur la figure 6, le coupleur optique C10 est disposé près du début du premier tronçon T1. Un signal injecté via ce coupleur C10 subira successivement les pertes dans T1, E1, T2, E2, T3, E3, T4. Ce signal sera le plus faible dans le dernier tronçon T4, et les effets non-linéaires seront également les plus faibles dans ce tronçon. Pour obtenir des effets de même grandeur dans le dernier tronçon T4 que dans le premier T1, il faut donc que la longueur L4 du dernier tronçon T4 soit plus grande que la longueur L1 du premier tronçon T1.

On prends une valeur de l'atténuation de fibre constante pour tous les tronçons, fixée par exemple à $\alpha = 0.23$ dB/km, et les pertes des épissures E1, E2, E3 sont notées respectivement P1, P2, P3.

En prenant la condition que le déphasage non linéaire induit par le contrôle sur l'un des axes neutres et intégré sur les i premiers tronçons (la première moitié de la boucle, T1,T2), est égale au déphasage non linéaire induit par le contrôle sur l'autre axe et intégré sur les i derniers tronçons (la deuxième moitié de la boucle, T3,T4), nous pouvons écrire :

$$(1\text{-}e^{-\alpha L1})/\alpha + (P1.e^{-\alpha L1}).(1\text{-}e^{-\alpha L1})/\alpha =$$

$$P1.P2.(e^{-2\alpha L1})(1\text{-}e^{-\alpha L4})/\alpha + P1.P2.P3.[e^{-\alpha(2L1+L4)}]\,[1\text{-}e^{-\alpha L4}]/\alpha$$

Nous obtenons le résultat que L1 et L4 doivent vérifier la relation :

$$1+(P1\text{-}1)e^{-\alpha L1} + P1.e^{-2\alpha L1} =$$

$$[P1.P2.e^{-2\alpha L1}]\,[1 + (P3\text{-}1)e^{-\alpha L4} + P3.e^{-2\alpha L4})]$$

Les pertes d'insertion dans le convertisseur de modes d'un chemin optique sans rotation des axes de polarisation sont négligeables par rapport aux termes retenus dans les équations ci-dessus.

Le modulateur optique de type Kerr de l'invention, ainsi que les dispositifs comprenant un tel modulateur peuvent comprendre un plus grande nombre (pair) de tronçons, mais ceci augmente la complexité du dispositif, ainsi que les pertes dues aux épissures.

L'homme de l'art saura décliner ce concept pour l'adapter à des multiples applications via des diverses réalisations, sans sortir pour autant du cadre de la présente invention, telle que défini par les revendications qui suivent.

**Revendications**

1. Modulateur d'amplitude de signaux optique de type Kerr **caractérisé en ce qu'**il comprend un nombre pair (2i>2, i entier) de tronçons (T1,T2,T3,T4,...) de fibre à maintien de polarisation ayant deux axes neutres de propagation, ces tronçons étant de longueurs optiques équivalentes et reliés optiquement entre eux par 2i-1 épissures (E1,E2,E3,...) en 2i-1 endroits, lesdites axes neutres de propagation de la fibre étant tournés de 90° à toutes les épissures, de manière à compenser la dispersion de polarisation.

2. Modulateur d'amplitude de signaux optique de type Kerr **caractérisé en ce que** qu'il comprend un nombre pair (2i>2, i entier) de tronçons (T1,T2,T3,T4...) de fibre à maintien de polarisation ayant deux axes neutres de propagation, ces tronçons étant de longueurs optiques équivalentes et reliés optiquement entre eux par 2i-1 épissures (E1,E2,E3,...) en 2i-1 endroits, lesdits axes neutres de propagation de la fibre étant tournés de 90° à toutes les épissures, sauf celle du milieu de la boucle (la i<sup>ème</sup>) (E1,E3), et la i<sup>ème</sup> épissure comprenant un convertisseur de modes, ledit convertisseur de modes comprend un démultiplexeur (C3) et un multiplexeur (C4) optiques à maintien de polarisation, ainsi qu'un premier et un deuxième chemins optiques ($F\lambda_s$, $F\lambda_c$) les connectant pour véhiculer respectivement lesdites première et deuxième longueurs d'onde ($\lambda_s$, $\lambda_c$), lesdits chemins optiques étant en fibre à maintien de polarisation, et en ce que les axes neutres dudit premier chemin ($F\lambda_s$) sont tournés de 90°, tandis que les axes neutres dudit deuxième chemin ($F\lambda_c$) ne sont pas tournés.

3. Dispositif de récupération toute-optique d'horloge par blocage actif de modes d'un laser à fibre en boucle, ledit laser en boucle comprenant une longueur de fibre optique (L), ladite boucle (L) ayant une entrée signal via un premier coupleur optique C1 pour l'injection d'un premier signal optique d'entrée caractérisé en partie par une première longueur d'onde ($\lambda_s$) et une sortie signal et un deuxième coupleur optique (C2) de sortie du signal d'horloge caractérisé en partie par une deuxième longueur d'onde ($\lambda_c$) ledit deuxième signal étant extrait de ladite boucle (L) via la fibre F3, **caractérisé en ce que** ladite boucle de fibre optique (L) comprend un nombre pair (2i>2, i entier) de tronçons (T1,T2,T3,T4...) de fibre à maintien de polarisation ayant deux axes neutres de propagation, ces tronçons étant de longueurs optiques équivalentes et reliés optiquement entre eux par 2i-1 épissures (E1,E2,E3,...) en 2i-1 endroits, lesdits axes neutres de propagation de la fibre étant tournés de 90° à toutes les épissures.

4. Dispositif de récupération toute-optique d'horloge par blocage actif de modes d'un laser à fibre en boucle, ladite laser en boucle comprenant une longueur de fibre optique (L), ladite boucle (L) ayant une entrée signal via un premier coupleur optique C1 pour l'injection d'un premier signal optique d'entrée caractérisé en partie par une première longueur d'onde ($\lambda_s$) et une sortie signal et un deuxième coupleur optique (C2) de sortie du signal d'horloge caractérisé en partie par une deuxième longueur d'onde ($\lambda_c$) ledit deuxième signal étant extrait de ladite boucle (L) via la fibre F3, **caractérisé en ce que** ladite boucle de fibre optique (L) comprend un nombre paire (2i>2, i entier) de tronçons (T1,T2,T3,T4...) de fibre à maintien de polarisation ayant deux axes neutres de propagation, ces tronçons étant de longueurs optiques équivalentes et reliés optiquement entre eux par 2i-1 épissures (E1,E2,E3,...) en 2i-1 endroits, lesdites axes neutres de propagation de la fibre étant tournées de 90° à toutes les épissures, sauf celle du milieu de la boucle (la i<sup>ème</sup>) (E1,E3), et la i<sup>ème</sup> épissure comprenant un convertisseur de modes, ledit convertisseur de modes comprend un démultiplexeur (C3) et un multiplexeur (C4) optiques à maintien de polarisation, ainsi qu'un premier et un deuxième chemins optiques ($F\lambda_s$, $F\lambda_c$) les connectant pour véhiculer respectivement lesdites première et deuxième longueurs d'onde ($\lambda_s$, $\lambda_c$), lesdits chemins optiques étant en fibre à maintien de polarisation, et en ce que les axes neutres dudit premier chemin ($F\lambda_s$) sont tournées de 90°, tandis que les axes neutres dudit deuxième chemin ($F\lambda_c$) ne sont pas tournés.

5. Modulateur optique selon la revendication 2, **caractérisé en ce que** lesdits démultiplexeur et multiplexeur optiques (C3,C4) sont des coupleurs optiques à maintien de polarisation et sélectifs en longueur d'onde qui sépare respectivement combine lesdits premier et deuxième signaux optiques ayant lesdites première et deuxième longueurs d'onde ($\lambda_s$, $\lambda_c$).

6. Modulateur optique selon l'une quelconque des revendications 1, 2 ou 5, **caractérisé en ce que** lesdits tronçons (T1,T2,T3,T4,...) de fibre à maintien de polarisation sont au nombre de quatre, et lesdites épissures sont au nombre de trois (E1,E2,E3).

7. Modulateur optique selon la revendication 6, **caractérisé en ce que** les longueurs (L1,L2,L3,L4) desdits quatre tronçons (T1,T2,T3,T4) de fibre à maintien de polarisation sont choisies telles que le déphasage relatif entre les composantes de polarisation desdits premier et deuxième signaux optiques ayant lesdites première et deuxième longueurs d'onde ($\lambda_s$, $\lambda_c$), intégré sur la première moitié de la boucle (T1,T2) est égale au déphasage relatif intégré sur la deuxième moitié de la boucle (T3,T4).

8. Dispositif de régénérateur de signaux optiques soliton comprenant un dispositif de récupération tout-optique d'horloge selon l'une quelconque des revendications 1,2, 5 à 7.

9. Dispositif démultiplexeur optique comprenant un dispositif de récupération tout-optique d'horloge selon l'une quelconque des revendications 1,2, 5 à 7.

10. Dispositif démodulateur optique comprenant un dispositif de récupération tout-optique d'horloge selon l'une quelconque des revendications 1,2, 5 à 7.

11. Laser à fibre en boucle comprenant un modulateur optique selon l'une quelconque des revendications 1,2, 5 à 7.

12. Système de transmission de solitons comprenant un dispositif de récupération d'horloge utilisant un laser à blocage de modes comprenant un modulateur Kerr selon l'une quelconque des revendications 1,2, 5 à 7.

# FIG. 1

# FIG. 2

FIG. 3

FIG. 4

FIG. 5

FIG. 6

FIG. 7

EP 0 788 016 A1

Office européen
des brevets

**RAPPORT DE RECHERCHE EUROPEENNE**

Numero de la demande

EP 97 40 0179

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | JOURNAL OF THE OPTICAL SOCIETY OF AMERICA - B, vol. 8, no. 3, 1 Mars 1991, pages 594-601, XP000177621 MOORES J D ET AL: "OPTICAL SWITCHING USING FIBER RING REFLECTORS" * figure 5 * --- | 1,8-12 | G02F1/35 H04L7/00 |
| A,D | OFC '94. OPTICAL FIBER COMMUNICATION. VOL.4. 1994 TECHNICAL DIGEST SERIES. CONFERENCE EDITION (IEEE CAT. NO.94CH3422-3), 1994 CONFERENCE ON OPTICAL FIBER COMMUNICATION - OFC'94, SAN JOSE, CA, USA, 20-25 FEB. 1994, ISBN 1-55752-321-5, 1994, WASHINGTON, DC, USA, OPT. SOC. AMERICA, USA, pages 310-311, XP000570117 SANDEL D ET AL: "Polarization-independent regenerator with nonlinear optoelectronic phase-locked loop" * le document en entier * --- | 2-12 | |
| A | OPTICS LETTERS, vol. 18, no. 15, 1 Août 1993, pages 1226-1228, XP000382933 LUCEK J K ET AL: "ALL-OPTICAL SIGNAL REGENERATOR" * le document en entier * ----- | 1-12 | **DOMAINES TECHNIQUES RECHERCHES (Int.Cl.6)** G02F H04L |

Le présent rapport a été établi pour toutes les revendications

| Lieu de la recherche | Date d'achèvement de la recherche | Examinateur |
|---|---|---|
| LA HAYE | 6 Mai 1997 | Diot, P |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
................................................................
& : membre de la même famille, document correspondant

EPO FORM 1503 03.82 (P04C02)